# EUROPÄISCHE PATENTSCHRIFT

(11) **EP 1 443 494 B1**
(45) Veröffentlichungstag und Bekanntmachung des Hinweises auf die Patenterteilung: **11.10.2006**
(21) Anmeldenummer: 03002067.1
(22) Anmeldetag: 29.01.2003
(51) Int. Cl.: G10L 15/08, G06F 17/27

(54) **Verfahren und Vorrichtung zur Einschränkung des Suchumfangs in einem Lexikon für Spracherkennung**
Method and device to limit the search scope in a speech recognition lexicon
Procédé et dispositif pour limiter la portée de la recherche dans un lexique pour la reconnaissance de la parole

(43) Veröffentlichungstag der Anmeldung: 04.08.2004
(73) Patentinhaber: Harman Becker Automotive Systems GmbH, 76307 Karlsbad (DE)
(72) Erfinder: Rinscheid, Ansgar, 21509 Gilde (DE)
(74) Vertreter: Grünecker, Kinkeldey, Stockmair & Schwanhäusser Anwaltssozietät

(56) Entgegenhaltungen:
- US-A- 6 065 003
- BAHL L R ET AL: "A FAST APPROXIMATE ACOUSTIC MATCH FOR LARGE VOCABULARY SPEECH RECOGNITION" IEEE TRANSACTIONS ON SPEECH AND AUDIO PROCESSING, IEEE INC. NEW YORK, US, Bd. 1, Nr. 1, 1993, Seiten 59-67, XP000358440 ISSN: 1063-6676
- OWOLABI O ET AL: "FAST APPROXIMATE STRING MATCHING" SOFTWARE PRACTICE & EXPERIENCE, JOHN WILEY & SONS LTD. CHICHESTER, GB, Bd. 18, Nr. 4, 1. April 1988 (1988-04-01), Seiten 387-393, XP000579816 ISSN: 0038-0644

## Beschreibung

Die Erfindung betrifft ein Verfahren zur Spracherkennung mittels eines Spracherkennungsgerätes, wobei Referenzsprachmuster in Form von M Musterzeichenketten aus jeweils n Zeichen, wobei n von Zeichenkette zu Zeichenkette variieren kann, in einem Speicher gespeichert werden, wobei die zu erkennende Sprache in Zeichenketten aus Zeichen transformiert wird, wobei die zu erkennenden Zeichenketten mit den Musterzeichenketten verglichen werden und wobei die Wahrscheinlichkeiten für die Identität einer zu erkennenden Zeichenkette mit den Musterzeichenketten berechnet werden.

Die Erfindung betrifft weiter eine Vorrichtung zur Spracherkennung, in welcher Referenzsprachmuster in Form von M Zeichenketten mit jeweils n Zeichen, wobei n von Zeichenkette zu Zeichenkette variieren kann, in einem Speicher gespeichert sind, wobei die zu erkennende Sprache in Zeichenketten aus Zeichen transformierbar ist, wobei die zu erkennenden Zeichenketten mit den Musterzeichenketten in einem Vergleicher vergleichbar sind und wobei die Wahrscheinlichkeiten für die Identität einer zu erkennenden Zeichenkette mit den Musterzeichenketten berechenbar sind.

Spracherkennung mittels eines Spracherkennungsgerätes wird z.B. eingesetzt, um Computer oder Telefonvermittlungsanlagen durch gesprochene Befehle zu steuern. Es sind bereits sprachgesteuerte Diktiergeräte bekannt, die Diktate in Schrift umsetzen, so dass ein Diktat gewissermaßen unmittelbar in den Speicher eines Personalcomputers diktiert und gedruckt werden kann.

Damit der Führer eines Kraftfahrzeuges während der Fahrt gefahrlos, ohne die Verkehrssicherheit zu gefährden, einen Anruf tätigen kann, wurden Autotelefone mit Freisprecheinrichtung und Spracherkennung entwickelt, bei denen die Rufnummer nicht mehr durch Eingabe mittels Tasten, sondern akustisch durch Sprechen der Rufnummer eingebbar ist. Denkbar sind auch sprachgesteuerte Fernsehgeräte, Videorecorder, Audio-Anlagen und dergleichen, die z.B. auf die Befehle "lauter", "leiser", "heller", "erstes Programm", "zweites Programm" usw. folgerichtig reagieren.

Ein Spracherkennungsgerät ermöglicht daher die unmittelbare Kommunikation zwischen Mensch und Maschine mittels der menschlichen Sprache. Die Bedienung einer Tastatur oder einer anderen Bedienvorrichtung von Hand ist nicht mehr erforderlich.

Ein Spracherkennungsgerät ist im wesentlichen aus einem Mikrofon zur Sprachaufnahme, einem digitalen Signalprozessor zur Digitalisierung und Filterung des vom Mikrofon gelieferten analogen Audiosignales, einer Datenbank mit Referenzsprachmustern und einem Vergleicher zum Vergleich der gesprochenen Sprachmuster mit den gespeicherten Referenzsprachmustern aufgebaut.

Bei einfachen Spracherkennungsgeräten werden die gesprochenen Sprachmuster mit allen in der Datenbank abgelegten Referenzsprachmustern verglichen und die Wahrscheinlichkeiten für die Identität mit den gesprochenen Sprachmustern berechnet, was als template matching oder pattern matching bezeichnet wird.

Leistungsfähigere Spracherkennungsgeräte arbeiten dagegen mit teilweise recht komplizierten Algorithmen, die neben den akustischen Merkmalen auch grammatikalische Regeln berücksichtigen, um die diktierte Sprache zu erkennen.

Die Sprachsignale werden in Zeitabschnitte von 16 - 32 ms unterteilt. Für jeden Zeitabschnitt werden etwa 8 - 12 charakteristische Merkmalswerte ermittelt, welche die Komponenten eines Merkmalsvektors darstellen.

Die Erfindung bezieht sich auf das einfache Vergleichsverfahren, das sogenannte template oder pattern matching, das jedoch mit dem Nachteil behaftet ist, dass die Spracherkennung viel Zeit in Anspruch nimmt, weil eine sehr große Anzahl in der Datenbank abgelegter Sprachmuster mit den diktierten Sprachmustern verglichen werden muss. In einer Datenbank können 50.000, 100.000 und mehr Sprachmuster als Referenzmuster gespeichert sein. Insbesondere beim Dialog mit einer sprachgesteuerten Maschine, zum Beispiel einer Telefonvermittlungsanlage, können lange Wartezeiten auftreten, die den Mensch-Maschine-Dialog behindern und der Akzeptanz sprachgesteuerter Maschinen in der Gesellschaft entgegenstehen.

Das Dokument US 6,065,003 offenbart ein Beispiel für ein Verfahren zum Vergleichen von Zeichenketten. Eine Reduktion der Anzahl nötigen Vergleiche wird durch eine Präfix basierte Vorfilterung der Zeichenketten erreicht.

Es ist daher Aufgabe der Erfindung, ein Verfahren und eine Vorrichtung zur Spracherkennung so zu gestalten, dass die zur Spracherkennung erforderliche Zeit erheblich verkürzt und das Spracherkennungsgerät somit schneller wird.

Eine erste verfahrensmäßige Lösung dieser Aufgabe ist im Anspruch 1 beschrieben.

Eine zweite verfahrensmäßige Lösung dieser Aufgabe ist im Anspruch 2 beschrieben.

Eine erste vorrichtungsgemäße Lösung dieser Aufgabe ist im Anspruch 6 beschrieben.

Eine zweite vorrichtungsgemäße Lösung dieser Aufgabe ist im Anspruch 7 beschrieben.

Bei allen verfahrensmäßigen und vorrichtungsmäßigen Lösungen der erfindungsgemäßen Aufgabe sind in einem Speicher Referenzsprachmuster in Form von M Zeichenketten mit jeweils n Zeichen gespeichert. Die Anzahl n der Zeichen kann von Zeichenkette zu Zeichenkette variieren. Die von einem Mikrofon aufgenommene Sprache wird in digitale Sprachsignale gewandelt, aus denen Zeichenketten mit Zeichen gebildet werden. Die zu erkennende Zeichenkette wird mit den im Speicher abgelegten Musterzeichenketten verglichen.

Beim ersten im Anspruch 1 beschriebenen erfindungsgemäßen Verfahren werden nur die ersten N Zeichen der Musterzeichenketten mit den ersten N Zeichen der zu erkennenden Zeichenkette verglichen. Es werden die Wahrscheinlichkeiten für die Identität berechnet.

In einem zweiten Verfahrensschritt werden nur diejenigen Zeichenketten ausgewählt, deren Wahrscheinlichkeit für Identität einen vorgebbaren Mindestwert, z.B. 75 %, übersteigt.

In einem dritten Verfahrensschritt werden nun alle Zeichen der ausgewählten Musterzeichenketten mit allen Zeichen der zu erkennenden Zeichenkette verglichen und wieder die Wahrscheinlichkeiten für Identität berechnet.

Im vierten Verfahrensschritt wird diejenige Referenzzeichenkette mit der höchsten Wahrscheinlichkeit für Identität als die gesuchte Zeichenkette identifiziert.

Beim zweiten erfindungsgemäßen Verfahren sind der erste und der zweite Verfahrensschritt mit dem ersten und zweiten Verfahrensschritt des ersten erfindungsgemäßen Verfahrens identisch.

Beim dritten Verfahrensschritt und den folgenden Verfahrensschritten wird Schritt für Schritt die Anzahl der zu vergleichenden Zeichen bei den Musterzeichenketten erhöht, z.B. jweils um 1, bis die Musterzeichenketten vollständig sind. Es werden Schritt für Schritt diejenigen Musterzeichenketten für die jeweils folgenden Schritte ausgewählt, deren Wahrscheinlichkeit für Identität einen vorgebbaren Mindestwert überschreitet.

Die im letzten Verfahrensschritt ermittelte Musterzeichenkette mit der höchsten Wahrscheinlichkeit für Identität wird als die gesuchte Zeichenkette identifiziert.

Die Erfindung wird nun näher anhand der Figuren beschrieben.

In der Zeichnung zeigen:
- Figur 1: ein Ausführungsbeispiel einer erfindungsgemäßen Vorrichtung und
- Figur 2: die Belegung eines Speichers mit Musterzeichenketten zur Erläuterung der Erfindung anhand von konkreten Zeichen.

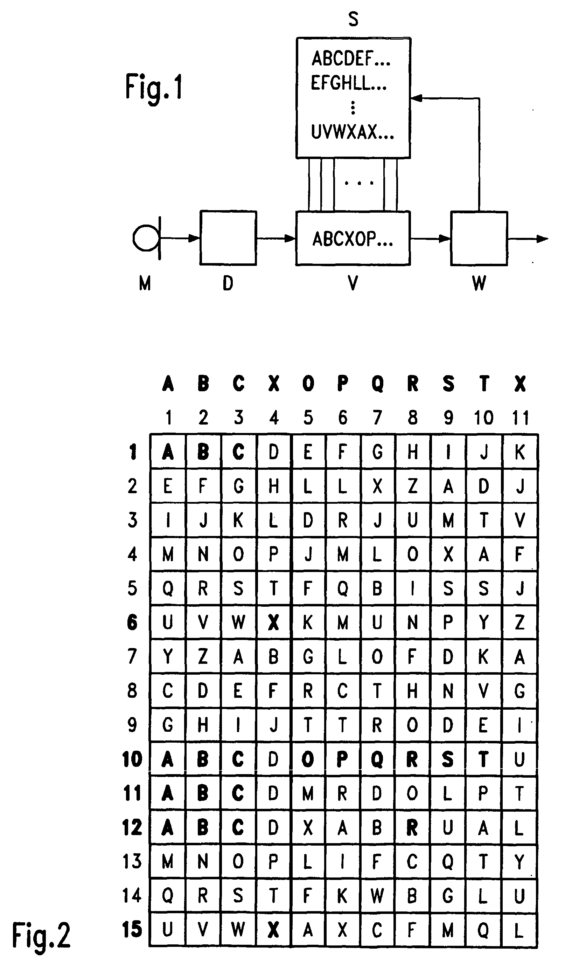

In Figur 2 ist die Belegung eines Speichers mit Musterzeichenketten dargestellt. Der Speicher ist beispielhaft als Matrixspeicher mit 15 Zeilen und 11 Spalten dargestellt. In jeder Zeile 1 15 steht eine Zeichenkette.

Als Beispiel soll die Zeichenkette ABCXOPQRSTX erkannt werden.

Im ersten Verfahrensschritt werden nun nur die ersten N=4 Zeichen der Musterzeichenkette und der zu erkennenden Zeichenkette berücksichtigt. Es werden daher die ersten vier Zeichen ABCX der zu identifizierenden Zeichenkette mit den ersten vier Zeichen der in den Zeilen des Speichers stehenden Musterzeichenketten verglichen. Bei den Musterzeichenketten 1, 6, 10, 11 und 12 liegen Treffer vor. Bei den Zeichenketten 1, 10, 11 und 12 stimmen drei der vier Zeichen mit der zu identifizierenden Zeichenkette überein.

Der Einfachheit halber und des besseren Verständnisses wegen sei beispielsweise angenommen, dass die Wahrscheinlichkeiten als Quotient aus der Anzahl der Treffer bei jedem Vergleich zur Gesamtanzahl der Zeichen zweier miteinander verglichenen Zeichenketten berechnet werden. Tatsächlich werden die Wahrscheinlichkeiten aber nach wesentlich komplizierten Algorithmen berechnet.

Die Wahrscheinlichkeit für Identität beträgt bei dem angenommenen Beispiel daher 3/4 = 75 %. Bei der Musterzeichenkette in der Zeile 6 und in der Zeile 15 stimmt nur ein Zeichen mit der zu identifizierenden Zeichenkette überein. Die Wahrscheinlichkeit für Identität beträgt daher 1/4 = 25 %. Bei den restlichen Musterzeichenketten stimmt kein Zeichen mit der zu erkennenden Zeichenkette überein.

Für die folgenden Verfahrensschritte werden nun die Musterzeichenketten der Zeilen 1, 6, 10, 11, 12 und 15 ausgewählt. Es können aber auch nur die Musterzeichenketten der Zeilen 1, 10, 11 und 12 ausgewählt werden.

Gemäß dem ersten erfindungsgemäßen Verfahren werden nun im dritten Verfahrensschritt alle Zeichen der ausgewählten Musterzeichenketten 1, 6, 10, 11, 12 und 15 oder 1, 10, 11 und 12 berücksichtigt und mit der zu erkennenden Zeichenkette verglichen. In der in Zeile 10 stehenden Musterzeichenkette werden sechs Treffer gelandet, während in der in Zeile 12 stehenden Musterzeichenkette nur ein Treffer vorliegt. Bei den in den Zeilen 1, 6, 11 und 15 stehenden Musterzeichenketten liegen keine weiteren Treffer vor.

Die Wahrscheinlichkeit für Identität beträgt für die in Zeile 10 stehende Musterzeichenkette 9/11 = 81,81 %. Die Wahrscheinlichkeit für Identität beträgt für die in Zeile 12 stehende Musterzeichenkette 4/11 = 36,36 %. Es wird daher die in Zeile 10 stehende Musterzeichenkette als die zu identifizierende Zeichenkette ermittelt.

Beim zweiten erfindungsgemäßen Verfahren werden im dritten Verfahrensschritt nicht alle Zeichen der Musterzeichenketten und der zu erkennenden Zeichenkette berücksichtigt. Vielmehr wird in den folgenden Verfahrensschritten die Anzahl der zu berücksichtigenden Zeichen von Schritt zu Schritt erhöht. Beispielsweise wird in den folgenden Verfahrensschritten von Schritt zu Schritt jeweils ein Zeichen mehr berücksichtigt, bis alle in den Spalten 5 - 11 stehenden Zeichen berücksichtigt und jeweils die Wahrscheinlichkeiten für Identität berechnet sind. Das Ergebnis ist dasselbe wie beim ersten erfindungsgemäßen Verfahren.

In Figur 1 ist ein Ausführungsbeispiel einer erfindungsgemäßen Vorrichtung im Blockschaltbild dargestellt.

Der Ausgang eines Mikrofons M ist mit dem Eingang eines digitalen Signalprozessors D verbunden, dessen Ausgang mit einem Vergleicher V verbunden ist. Der Vergleicher V ist mit einem Speicher S und einer Recheneinheit W verbunden, die mit dem Speicher S verbunden ist.

Die vom Mikrofon M gelieferten analogen Audiosignale werden vom digitalen Signalprozessor D digitalisiert und in Zeichenketten transformiert, die zum Vergleicher V übertragen werden. Im Vergleicher V wird die vom digitalen Signalprozessor D gelieferte Zeichenkette gemäß dem ersten oder zweiten erfindungsgemäßen Verfahren mit den im Speicher S abgelegten Musterzeichenketten verglichen. Die Recheneinheit W berechnet gemäß dem ersten oder zweiten erfindungsgemäßen Verfahren die Wahrscheinlichkeiten für Identität und gibt zum Schluss der erfindungsgemäßen Verfahren das Ergebnis aus.

Besonders vorteilhaft ist es, die Musterzeichenketten nach einer Baumstruktur im Speicher S abzulegen.

Durch die erfindungsgemäße Maßnahme, im ersten Verfahrensschritt nicht alle Zeichen der Musterzeichenketten und der zu identifizierenden Zeichenkette, sondern nur N Zeichen zu berücksichtigen, wird die Zeit zur Identifizierung einer Zeichenkette erheblich verringert. Der Zeitgewinn wird hauptsächlich durch die Wahl der Anzahl der für den ersten Verfahrensschritt zum Vergleich vorgesehenen Zeichen der Zeichenketten bestimmt. Je weniger Zeichen vorgesehen werden, desto größer wird zwar einerseits der Zeitgewinn, andererseits aber erhöht sich dadurch die Fehlerwahrscheinlichkeit. Ein Vorteil der Erfindung liegt nun darin, dass die Geschwindigkeit und die Fehlerwahrscheinlichkeit durch Wahl der Anzahl der für die Verfahrensschritte zum Vergleich vorgesehenen Zeichen optimal an unterschiedliche Einsatzfälle anpassbar sind.

### Bezugszeichenliste

- D: Digitaler Signalprozessor
- M: Mikrofon
- S: Speicher
- V: Vergleicher
- W: Recheneinheit

## Patentansprüche

1. Verfahren zur Spracherkennung mittels eines Spracherkennungsgerätes,
wobei Referenzsprachmuster in Form von M Musterzeichenketten mit jeweils n Zeichen, wobei n von Zeichenkette zu Zeichenkette variieren kann, in einem Speicher (S) gespeichert werden,
wobei die zu erkennende Sprache in Zeichenketten aus Zeichen transformiert wird,
wobei die zu erkennenden Zeichenketten mit den Musterzeichenketten in einem Vergleicher (V) miteinander verglichen werden und
wobei die Wahrscheinlichkeiten für die Identität einer zu erkennenden Zeichenkette mit den Musterzeichenketten berechnet werden,
**gekennzeichnet durch** folgende Verfahrensschritte:
Erster Verfahrensschritt
Es werden die ersten N Zeichen aller Musterzeichenketten mit den ersten N Zeichen der zu erkennenden Zeichenkette verglichen und die Wahrscheinlichkeiten für Identität berechnet;
Zweiter Verfahrensschritt
Es werden die Musterzeichenketten ausgewählt, deren Wahrscheinlichkeit für Identität einen vorgebbaren Mindestwert übersteigt;
Dritter Verfahrensschritt
Es werden alle Zeichen der ausgewählten Musterzeichenketten mit allen Zeichen der zu erkennenden Zeichenkette verglichen und die Wahrscheinlichkeiten für Identität berechnet;
Vierter Verfahrensschritt
Es wird diejenige Musterzeichenkette mit der höchsten Wahrscheinlichkeit für Identität mit der zu erkennenden Zeichenkette als die gesuchte Zeichenkette identifiziert.

2. Verfahren zur Spracherkennung mittels eines Spracherkennungsgerätes,
wobei Referenzsprachmuster in Form von M Musterzeichenketten mit jeweils n Zeichen, wobei n von Zeichenkette zu Zeichenkette variieren kann, in einem Speicher (S) gespeichert werden,
wobei die zu erkennende Sprache in Zeichenketten aus Zeichen transformiert wird,
wobei die zu erkennenden Zeichenketten mit den Musterzeichenketten in einem Vergleicher verglichen werden und
wobei die Wahrscheinlichkeiten für die Identität einer zu erkennenden Zeichenkette mit den Musterzeichenketten berechnet werden,
**gekennzeichnet durch** folgende Verfahrensschritte:
Erster Verfahrensschritt
Es werden die ersten N Zeichen aller Musterzeichenketten mit den ersten N Zeichen der zu erkennenden Zeichenkette verglichen und die Wahrscheinlichkeiten für Identität berechnet;
Zweiter Verfahrensschritt
Es werden die Musterzeichenketten ausgewählt, deren Wahrscheinlichkeit für Identität einen vorgebbaren Mindestwert übersteigt;
Restliche Verfahrensschritte
In den folgenden Verfahrensschritten wird Schritt für Schritt die Anzahl der zu vergleichenden Zeichen bei den Zeichenketten erhöht, bis die Zeichenketten vollständig sind, und es werden Schritt für Schritt diejenigen Musterzeichenketten für den folgenden Schritt ausgewählt, deren Wahrscheinlichkeit für Identität einen vorgebbaren Mindestwert überschreitet;
die im letzten Verfahrensschritt ermittelte Musterzeichenkette mit der höchsten Wahrscheinlichkeit für Identität wird als die gesuchte Zeichenkette identifiziert.

3. Verfahren nach Anspruch 2,
**dadurch gekennzeichnet, dass** die Anzahl der Zeichen von Schritt zu Schritt um eine vorgebbare Anzahl erhöht wird.

4. Verfahren nach Anspruch 3,
**dadurch gekennzeichnet, dass** die Anzahl der Zeichen von Schritt zu Schritt um 1 erhöht wird.

5. Verfahren nach einem der Ansprüche 1 - 4,
**dadurch gekennzeichnet, dass** die M Zeichenketten nach einer Baumstruktur im Speicher (S) abgelegt werden.

6. Vorrichtung zur Spracherkennungumfassend
einen Speicher (S), der konfiguriert ist, Referenzsprachmuster in Form von M Musterzeichenketten mit jeweils n Zeichen, wobei n von Musterzeichenkette zu Musterzeichenkette variieren kann, zu speichern,
einen Vergleicher (V), der konfiguriert ist, zu erkennende Zeichenketten aus Zeichen, in die die zu erkennende Sprache transformierbar ist, mit Musterzeichenketten zu vergleichen,
eine Recheneinheit (W), die konfiguriert ist, die Wahrscheinlichkeiten für die Identität einer zu erkennenden Zeichenkette mit den Musterzeichenketten zu berechnen,
**dadurch gekennzeichnet, dass** der Vergleicher (V) konfiguriert ist, die ersten N Zeichen aller Musterzeichenketten mit den ersten N Zeichen der zu erkennenden Zeichenkette zu vergleichen und die Recheneinheit (W) konfiguriert ist, die Wahrscheinlichkeiten für Identität zu berechnen,
und dass die Vorrichtung konfiguriert ist, die Musterzeichenketten, deren Wahrscheinlichkeit für Identität einen vorgebbaren Mindestwert übersteigt, auszuwählen,
und dass der Vergleicher (V) konfiguriert ist, alle Zeichen der ausgewählten Musterzeichenketten mit allen Zeichen der zu erkennenden Zeichenkette zu vergleichen und die Recheneinheit (W) konfiguriert ist, die Wahrscheinlichkeiten für Identität zu berechnen, und
dass die Vorrichtung konfiguriert ist, diejenige Musterzeichenkette mit der höchsten Wahrscheinlichkeit für Identität als die gesuchte Zeichenkette zu identifizieren.

7. Vorrichtung zur Spracherkennung, umfassend
einen Speicher (S), der konfiguriert ist, Referenzsprachmuster in Form von M Musterzeichenketten mit jeweils n Zeichen, wobei n von Musterzeichenkette zu Musterzeichenkette variieren kann, zu speichern,
einen Vergleicher (V), der konfiguriert ist, zu erkennende Zeichenketten aus Zeichen, in die die zu erkennende Sprache transformierbar ist, mit Musterzeichenketten zu vergleichen,
eine Recheneinheit (W), die konfiguriert ist, die Wahrscheinlichkeiten für die Identität einer zu erkennenden Zeichenkette mit den Musterzeichenketten zu berechnen,
**dadurch gekennzeichnet, dass** der Vergleicher (V) konfiguriert ist, die ersten N Zeichen aller Musterzeichenketten mit den ersten N Zeichen der zu erkennenden Zeichenkette zu vergleichen und die Recheneinheit (W) konfiguriert ist, die Wahrscheinlichkeiten für Identität zu berechnen,
und dass die Vorrichtung konfiguriert ist, die Musterzeichenketten, deren Wahrscheinlichkeit für Identität einen vorgebbaren Mindestwert übersteigt, auszuwählen,
und dass die Vorrichtung konfiguriert ist, Schritt für Schritt die Anzahl der zu vergleichenden Zeichen bei den Zeichenketten zu erhöhen, bis die Zeichenketten vollständig sind,
Schritt für Schritt diejenigen Musterzeichenketten für den folgenden Verfahrensschritt auszuwählen, deren Wahrscheinlichkeit für Identität einen vorgebbaren Mindestwert überschreitet, und
die im letzten Verfahrensschritt ermittelte Musterzeichenkette mit der höchsten Wahrscheinlichkeit für Identität als die gesuchte Zeichenkette zu identifizieren.

8. Vorrichtung nach Anspruch 7,**dadurch gekennzeichnet, dass** die Vorrichtung konfiguriert ist, die Anzahl der Zeichen Schritt für Schritt um eine vorgebbare Anzahl zu erhöhen.

9. Vorrichtung nach Anspruch 8,**dadurch gekennzeichnet, dass** die Vorrichtung konfiguriert ist, die Anzahl der Zeichen Schritt für Schritt um 1 zu erhöhen.

10. Vorrichtung nach einem der Ansprüche 6 bis 9,**dadurch gekennzeichnet, dass** der Speicher (S) konfiguriert ist, die Musterzeichenketten gemäß einer Baumstruktur zu speichern.

## Claims

1. A method for speech recognition by means of a speech recognition device,
wherein reference speech patterns in the form of M pattern strings of characters with n characters each, wherein n may vary from character string to character string, are stored in a memory (S),
wherein the speech to be recognized is transformed in character strings of characters,
wherein the character strings to be recognized are compared with the pattern strings of characters in a comparator (V), and
wherein the probabilities for the identity of a character string to be recognized with the pattern strings of characters strings are calculated,
**characterized by** the following method steps:
First method step
The first N characters of all pattern strings of characters are compared to the first N characters of the character string to be recognized and the probabilities for identity are calculated;
Second method step
The pattern strings of characters are selected whose probability for identity exceeds a predeterminable minimum value;
Third method step
All characters of the selected pattern string of characters are compared with all characters of the character string to be recognized and the probabilities for identity are calculated;
Fourth method step
The pattern string of characters with the highest probability for identity with the character string to be recognized is identified as the character string searched for.

2. A method for speech recognition by means of a speech recognition device,
wherein reference speech patterns in the form of M pattern strings of characters with n characters each, wherein n may vary from character string to character string, are stored in a memory (S),
wherein the speech to be recognized is transformed in character strings of characters,
wherein the character strings to be recognized are compared with the pattern strings of characters in a comparator, and
wherein the probabilities for the identity of a character string to be recognized with the character strings are calculated,
**characterized by** the following method steps:
First method step
The first N characters of all pattern strings of characters are compared to the first N characters of the character string to be recognized and the probabilities for identity are calculated;
Second method step
The pattern strings of characters are selected whose probability for identity exceeds a predeterminable minimum value;
Remaining method steps
In the following methods steps, the number of the characters to be compared in the character strings is increased step by step until the character strings are complete, and those pattern strings of characters are selected step by step for the following step whose probability for identity exceeds a predeterminable minimum value;
The pattern string of characters with the highest probability for identity determined in the last method step is identified as the character string searched for.

3. Method as claimed in claim 2,
**characterized in that** the number of characters is increased step by step by a predeterminable number.

4. Method as claimed in claim 3,
**characterized in that** the number of characters is increased step by step by one.

5. Method as claimed in one of claims 1 to 4,
**characterized in that** the M character strings are stored in the memory (S) according to a tree structure.

6. A device for speech recognition, comprising
a memory (S) configured to store reference speech patterns in the form of M pattern strings of characters with n characters each, wherein n may vary from pattern string of characters to pattern string of characters,
a comparator (V), which is configured to compare character strings of characters to be recognized into which the voice to be recognized can be transformed with pattern strings of characters,
a calculating unit (W) which is configured to calculate the probabilities for the identity of a character string to be recognized with the pattern strings of characters,
**characterized in that** the comparator (V) is configured to compare the first N characters of all pattern strings of characters with the first N characters of the character string to be recognized, and the calculating unit (W) is configured to calculate the probability for identity,
and that the device is configured to select the pattern strings of characters whose probability for identity exceeds a predeterminable minimum value,
and that the comparator (V) is configured to compare all characters of the selected pattern strings of characters with all characters of the character string to be recognized, and the calculating unit (W) is configured to calculate the probabilities for identity, and
that the device is configured to identify the pattern string of characters with the highest probability for identity as the character string searched for.

7. A device for speech recognition, comprising
a memory (S) configured to store reference speech patterns in the form of M pattern strings of characters with n characters each, wherein n may vary from pattern string of characters to pattern string of characters,
a comparator (V), which is configured to compare character strings of characters to be recognized into which the voice to be recognized can be transformed with pattern strings of characters,
a calculating unit (W) which is configured to calculate the probabilities for the identity of a character string to be recognized with the pattern strings of characters,
**characterized in that** the comparator (V) is configured to compare the first N characters of all pattern strings of characters with the first N characters of the character string to be recognized, and the calculating unit (W) is configured to calculate the probability for identity,
and that the device is configured to select the pattern strings of characters whose probability for identity exceeds a predeterminable minimum value,
and that the device is configured to increase step by step the number of the characters to be compared in the character strings until the character strings are complete,
to select step by step those pattern strings of characters for the following method step whose probability for identity exceeds a predeterminable minimum value, and
to identify the pattern string of characters with the highest probability for identity that is detected in the last method step as the character string searched for.

8. The device as claimed in claim 7, **characterized in that** the device is configured to increase the number of characters step by step by a predeterminable number.

9. The device as claimed in claim 8, **characterized in that** the device is configured to increase the number of characters step by step by 1.

10. The device as claimed in one of claims 6 to 9, **characterized in that** the memory (S) is configured to store the pattern strings of characters according to a tree structure.

## Revendications

1. Procédé de reconnaissance vocale au moyen d'un appareil de reconnaissance vocale,
dans lequel des échantillons vocaux de référence sont stockés dans une mémoire (S) sous la forme de M chaînes de caractères types avec respectivement n caractères, dans lesquels n peut varier d'une chaîne de caractères à une autre chaîne de caractères,
dans lequel la voix à reconnaître est transformée en chaînes de caractères,
dans lequel les chaînes de caractères à reconnaître et les chaînes de caractères types sont comparées les unes par rapport aux autres dans un comparateur (V) et
dans lequel les probabilités de l'identité d'une chaîne de caractères à reconnaître avec les chaînes de caractères types sont calculées,
**caractérisé par** les étapes de procédé suivantes :
Première étape de procédé
Les N premiers caractères de toutes les chaînes de caractères types sont comparés aux N premiers caractères de la chaîne de caractères à reconnaître et les probabilités d'une identité sont calculées ;
Deuxième étape de procédé
Les chaînes de caractères types, pour lesquelles la probabilité d'une identité dépasse une valeur minimale pouvant être prédéterminée, sont sélectionnées ;
Troisième étape de procédé
Tous les caractères des chaînes de caractères types sélectionnées sont comparés à tous les caractères de la chaîne de caractères à reconnaître et les probabilités d'une identité sont calculées ;
Quatrième étape de procédé
La chaîne de caractères type pour laquelle la probabilité d'une identité avec la chaîne de caractères à reconnaître est la plus élevée est identifiée comme étant la chaîne de caractères recherchée.

2. Procédé de reconnaissance vocale au moyen d'un appareil de reconnaissance vocale,
dans lequel des échantillons vocaux de référence sont stockés dans une mémoire (S) sous la forme de M chaînes de caractères types avec respectivement n caractères, dans lesquels n peut varier d'une chaîne de caractères à une autre chaîne de caractères,
dans lequel la voix à reconnaître est transformée en chaînes de caractères,
dans lequel les chaînes de caractères à reconnaître sont comparées aux chaînes de caractères types dans un comparateur et
dans lequel les probabilités de l'identité d'une chaîne de caractères à reconnaître avec les chaînes de caractères types sont calculées,
**caractérisé par** les étapes de procédé suivantes :
Première étape de procédé
Les N premiers caractères de toutes les chaînes de caractères types sont comparés aux N premiers caractères de la chaîne de caractères à reconnaître et les probabilités d'une identité sont calculées ;
Deuxième étape de procédé
Les chaînes de caractères types, pour lesquelles la probabilité d'une identité dépasse une valeur minimale pouvant être prédéterminée, sont sélectionnées ;
Etapes de procédé restantes
Dans les étapes de procédé suivantes, le nombre des caractères à comparer dans les chaînes de caractères augmente étape par étape, jusqu'à ce que les chaînes de caractères soient complètes et, étape par étape, les chaînes de caractères types, pour lesquelles la probabilité d'une identité dépasse une valeur minimale pouvant être prédéterminée, sont sélectionnées pour l'étape suivante;
la chaîne de caractères type déterminée dans la dernière étape de procédé, pour laquelle la probabilité d'une identité est la plus élevée, est identifiée comme étant la chaîne de caractères recherchée.

3. Procédé selon la revendication 2,
**caractérisé en ce que** le nombre de caractères augmente étape par étape d'une quantité pouvant être prédéterminée.

4. Procédé selon la revendication 3,
**caractérisé en ce que** le nombre de caractères est augmenté étape par étape de 1.

5. Procédé selon l'une quelconque des revendications 1 à 4,
**caractérisé en ce que** les M chaînes de caractères sont classées dans la mémoire (S) selon une structure arborescente.

6. Dispositif de reconnaissance vocale, comprenant
une mémoire (S), qui est configurée pour stocker des échantillons vocaux de référence sous la forme de M chaînes de caractères types avec respectivement n caractères, dans lesquels n peut varier d'une chaîne de caractères type à une autre chaîne de caractères type,
un comparateur (V), qui est configuré pour comparer les chaînes de caractères à reconnaître constituées de caractères, en lesquels la voix à reconnaître peut être transformée, avec les chaînes de caractères types,
une unité de calcul (W), qui est configurée pour calculer les probabilités de l'identité d'une chaîne de caractères à reconnaître avec les chaînes de caractères types,
**caractérisé en ce que** le comparateur (V) est configuré pour comparer les N premiers caractères de toutes les chaînes de caractères types aux N premiers caractères de la chaîne de caractères à reconnaître et l'unité de calcul (W) est configurée pour calculer les probabilités d'une identité,
le dispositif est configuré pour sélectionner les chaînes de caractères types pour lesquelles la probabilité d'une identité dépasse une valeur minimale pouvant être prédéterminée,
le comparateur (V) est configuré pour comparer tous les caractères des chaînes de caractères types sélectionnées à tous les caractères de la chaîne de caractères à reconnaître et l'unité de calcul (W) est configurée pour calculer les probabilités d'une identité, et
le dispositif est configuré pour identifier la chaîne de caractères type, pour laquelle la probabilité d'une identité est la plus élevée, comme étant la chaîne de caractères recherchée.

7. Dispositif de reconnaissance vocale, comprenant
une mémoire (S) qui est configurée pour stocker des échantillons vocaux de référence sous la forme de M chaînes de caractères types avec respectivement n caractères, dans lesquels n peut varier d'une chaîne de caractères type à une autre chaîne de caractères type,
un comparateur (V) qui est configuré pour comparer les chaînes de caractères à reconnaître constituées de caractères, en lesquels la voix à reconnaître peut être transformée, avec les chaînes de caractères types,
une unité de calcul (W) qui est configurée pour calculer les probabilités de l'identité d'une chaîne de caractères à reconnaître avec les chaînes de caractères types,
**caractérisé en ce que** le comparateur (V) est configuré pour comparer les N premiers caractères de toutes les chaînes de caractères types aux N premiers caractères de la chaîne de caractères à reconnaître et l'unité de calcul (W) est configurée pour calculer les probabilités d'une identité,
le dispositif est configuré pour sélectionner les chaînes de caractères types, pour lesquelles la probabilité d'une identité dépasse une valeur minimale pouvant être prédéterminée,
le dispositif est configuré pour augmenter étape par étape le nombre des caractères à comparer dans les chaînes de caractères, jusqu'à ce que les chaînes de caractères soient complètes,
sélectionner étape par étape les chaînes de caractères types, pour lesquelles la probabilité d'une identité dépasse une valeur minimale pouvant être prédéterminée, pour l'étape de procédé suivante, et
identifier la chaîne de caractères type déterminée dans la dernière étape du procédé, pour laquelle la probabilité d'une identité est la plus élevée, comme étant la chaîne de caractères recherchée.

8. Dispositif selon la revendication 7, **caractérisé en ce que** le dispositif est configuré pour augmenter étape par étape le nombre de caractères d'une quantité pouvant être prédéterminée.

9. Dispositif selon la revendication 8, **caractérisé en ce que** le dispositif est configuré pour augmenter étape par étape le nombre des caractères de 1.

10. Dispositif selon l'une quelconque des revendications 6 à 9, **caractérisé en ce que** la mémoire (S) est configurée pour stocker les chaînes de caractères types selon une structure arborescente.
